# EUROPEAN PATENT APPLICATION

(11) **EP 1 248 345 A2**
(43) Date of publication of application: **09.10.2002**
(21) Application number: 02007566.9
(22) Date of filing: 03.04.2002
(51) Int. Cl.: H02J 7/00, H02M 3/158

(54) **Voltage conversion apparatus**

(30) Priority: 04.04.2001 JP 2001106116
(71) Applicant: TOYOTA JIDOSHA KABUSHIKI KAISHA, Toyota-shi, Aichi 471-8571 (JP)
(72) Inventor: Kataoka, Kenji, Toyota-shi, Aichi-ken, 471-8571 (JP); Tsuji, Kimitoshi, Toyota-shi, Aichi-ken, 471-8571 (JP)
(74) Representative: Leson, Thomas Johannes Alois, Dipl.-Ing.

(57) **Abstract**

A voltage conversion apparatus (1) is connected between a first charging/discharging device (3) and a second charging/discharging device (4), and performs voltage conversion between the first and second charging/discharging devices. The apparatus includes a first switching device (11) having one terminal connected to the first charging/discharging device, a second switching device (12) connected between the other terminal of the first switching device and the earth, a third switching device (13) having one terminal connected to the second charging/discharging device, a fourth switching device (14) connected between the other terminal of the third switching device and the earth, and a coil provided between the other terminal of the first switching device and the other terminal of the third switching device. A controller (31) is provided for controlling the first through fourth switching devices, such that the first and fourth switching devices are switched on and off in the same phase, and the second and third switching devices are switched on and off in the same phase that is reverse to that of switching of the first and fourth switching devices.

## Description

### BACKGROUND OF THE INVENTION

### 1. Field of Invention

The invention relates to a voltage conversion apparatus that performs voltage conversion between charging/discharging devices, such as batteries and capacitors. More particularly, the invention is concerned with a voltage conversion apparatus adapted to change a value or level of a voltage of a charging/discharging device, such as a battery or a capacitor, and apply the resulting voltage having a different value to another charging/discharging device.

### 2. Descriotion of Related Art

To meet with a demand for environmental protection in recent years, there have been developed vehicles using regeneration or restoration control for improving the fuel economy by converting the kinetic energy of the vehicle into the electric energy during braking (i.e., by performing regenerative braking). In the regeneration control, regenerated energy obtained through regenerative braking is initially received by a capacitor, and a value of a voltage of the capacitor is then changed so that the resulting electric power is supplied to a battery installed on the vehicle.

As one example of the voltage conversion apparatus using the regeneration control as described above, there is known a step-up/step-down converter that performs charging and discharging of two condensers, as disclosed in Laid-open Publication No. 6-66204 of Utility Model Application. The step-up/step-down converter is constructed such that a reactor is connected to one of the condensers, and a switching device and a diode are connected between the output of the reactor and the earth (ground). In addition, a switching device and a diode are connected between the output of the reactor and the other condenser. In a step-up operation, the switching device connected between the output of the reactor and the other condenser is kept in the ON state, and the switching device connected between the output of the reactor and the earth is switched on and off, so that a high voltage is applied to the other condenser. In a step-down operation, on the other hand, the switching device connected between the output of the reactor and the other condenser is switched on and off, and the switching device connected between the output of the reactor and the earth is kept in the ON state, so that a low voltage is applied to the other condenser.

However, the step-up/step-down converter as described above has a problem of discontinuity in its operation when the voltage conversion ratio is in the vicinity of 1.

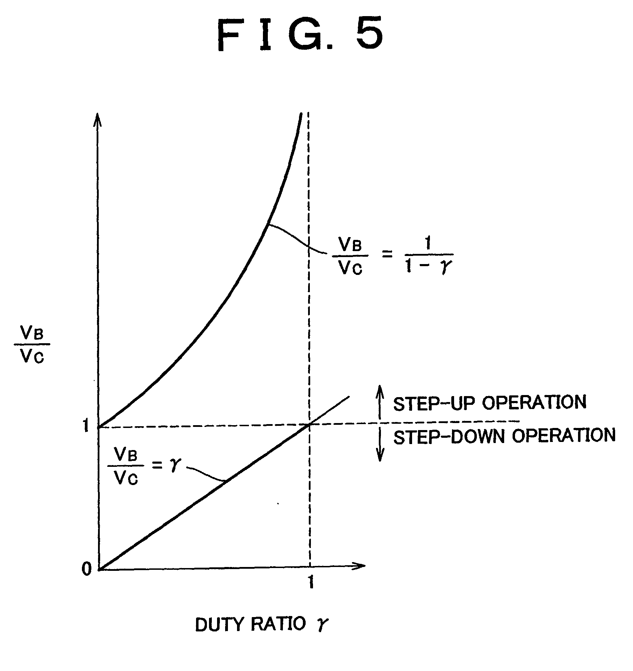

For example, the ratio of output voltage to input voltage in a step-up operation of the step-up/step-down converter is equal to 1/(1 - γ), where γ represents switching duty ratio (T_{ON} / (T_{ON} + T_{OFF})) of the switching device. On the other hand, the ratio of output voltage to input voltage in a step-down operation of the converter is equal to γ. Fig. 5 shows the relationship between the duty ratio γ of the switching device and the ratio of the output voltage to the input voltage in step-up and step-down operations of the converter. As is understood from Fig. 5, the duty ratio γ of the switching device needs to be changed when the step-up/step-down converter shifts from a step-down operation to a step-up operation, for example, resulting in discontinuity in the operation of the switching device.

### SUMMARY OF THE INVENTION

It is therefore one object of the invention to provide a voltage conversion apparatus that permits smooth shifting or switching between step-up operations and step-down operations.

To accomplish the above and/or other object(s), there is provided according to one aspect of the invention, a voltage conversion apparatus which is connected between a first charging/discharging device and a second charging/discharging device and which performs voltage conversion between the first charging/discharging device and the second charging/discharging device. The voltage conversion apparatus includes: (a) a first switching device having a first terminal and a second terminal, the first terminal being connected to the first charging/discharging device, (b) a second switching device connected between the second terminal of the first switching device and the earth, (c) a third switching device having a third terminal and a fourth terminal, the third terminal being connected to the second charging/discharging device, (d) a fourth switching device connected between the fourth terminal of the third switching device and the earth, (e) a coil provided between the second terminal of the first switching device and the fourth terminal of the third switching device, and (f) a controller that controls operations of the first switching device, the second switching device, the third switching device and the fourth switching device, such that the first switching device and the fourth switching device are switched on and off in a first phase, and the second switching device and the third switching device are switched on and off in a second phase that is reverse to the first phase of switching of the first switching device and the fourth switching device.

In one embodiment of the invention, the first charging/discharging device is charged by use of braking energy of a vehicle.

In the voltage conversion apparatus constructed according to this aspect of the invention, the operations of the first through fourth switching devices are controlled such that the first switching device and the fourth switching device are switched on and off in the same phase, and the second switching device and the third switching device are switched on and off in the same phase that is reverse to the phase of switching of the first and fourth switching devices. Thus, the four switching devices provide a step-up/step-down chopper in which a step-down chopper and a step-up chopper are connected in series. The thus constructed voltage conversion apparatus permits continuous switching from a step-up operation to a step-down operation, or vice versa, by continuously varying the duty ratio of switching of the switching devices. This arrangement makes it possible to avoid noise and false operations due to the noise, upon switching from a step-down operation to a step-up operation or vice versa.

### BRIEF DESCRIPTION OF THE DRAWINGS

The foregoing and/or further objects, features and advantages of the invention will become more apparent from the following description of an exemplary preferred embodiment with reference to the accompanying drawings, in which like numerals are used to represent like elements and wherein:
Fig. 1 is a circuit diagram showing a voltage conversion apparatus according to one embodiment of the invention;
Fig. 2 is a timing chart showing input signals of FETs in the voltage conversion apparatus of Fig. 1;
Fig. 3 is a schematic circuit diagram showing the voltage conversion apparatus of Fig. 1 during its operation;
Fig. 4 is a graph showing the relationship between the switching duty ratio and the voltage ratio in the voltage conversion apparatus of Fig. 1; and
Fig. 5 is a graph showing the relationship between the switching duty ratio and the voltage ratio in a known voltage conversion apparatus.

### DETAILED DESCRIPTION OF PREFERRED EMBODIMENTS

One exemplary preferred embodiment of the invention will be described in detail with reference to the accompanying drawings, in which the same reference numerals are used for identifying structurally and/or functionally corresponding elements.

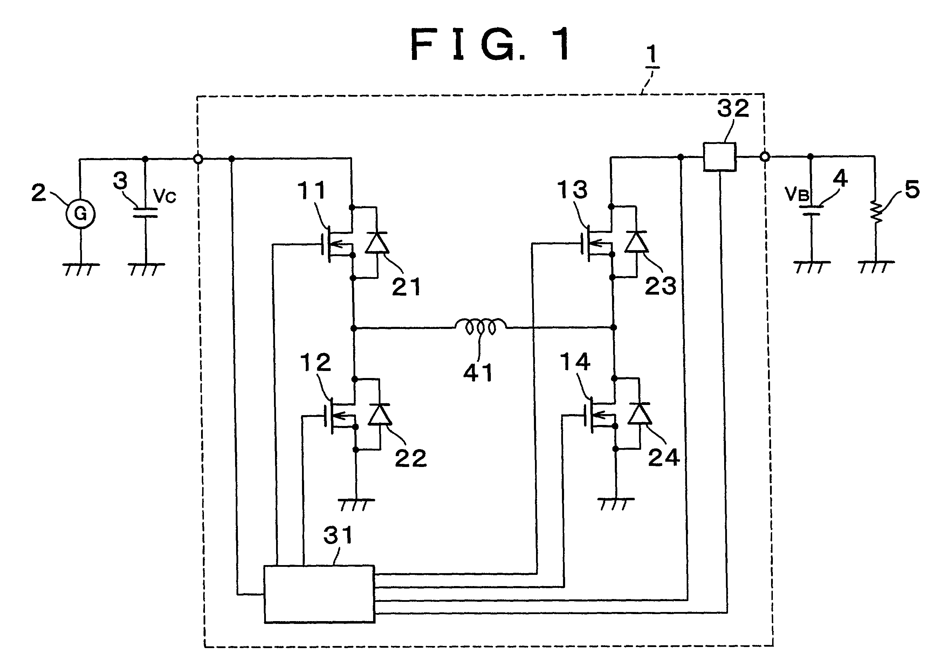

Fig. 1 schematically illustrates a voltage conversion apparatus according to a preferred embodiment of the invention. As shown in Fig. 1, the voltage conversion apparatus 1, which is installed on a motor vehicle, performs voltage conversion between a condenser 3 that is to be charged by a generator 2, and a battery 4 (which will be described in detail later). The generator 2 serves to generate electric power, by using braking energy generated by an engine of the vehicle.

The condenser 3 is connected between a positive terminal of the generator 2 and the earth (ground), and may be charged in accordance with an electric power generated by the generator 2. The condenser 3 may also be charged or discharged as needed through operations of the voltage conversion apparatus 1. The battery 4 serving as a voltage supply source for the vehicle, is connected to a load 5, such as, for example, an air conditioner, which is installed on the vehicle and serves as a power consumer. The battery 4 is in the form of, for example, a storage battery, and is chargeable by an alternator (not shown). The battery 4 may also be charged and discharged as needed through operations of the voltage conversion apparatus 1.

The voltage conversion apparatus 1 includes four FETs (Field Effect Transistors) 11 to 14, a controller 31, and a current sensor 32. The FETs 11 to 14 are switching devices that cause the voltage conversion apparatus 1 to operate as a step-up/step-down chopper. Each of the FETs 11 to 14 may be provided by, for example, a MOS type FET (MOSFET).

The voltage conversion apparatus 1 further includes diodes 21 to 24, each of which is connected between a drain and a source of a corresponding one of the FETs 11 to 14. More specifically, a diode 21 is connected between a drain and a source of the FET 11, and a diode 22 is connected between a drain and a source of the FET 12. In addition, a diode 23 is connected between a drain and a source of the FET 13, and a diode 24 is connected between a drain and a source of the FET 14. The cathodes of the diodes 21 to 24 are respectively directed toward the drain sides of the corresponding FETs 11 to 14. Thus, the diodes 21 to 24 are oriented in the reverse direction as viewed from the drain toward the source of each FET such that current is allowed to flow only in a direction from the source to the drain of the FET.

The drain of the FET 11 is connected to the generator 2 and the condenser 3. The source of the FET 11 is connected to the drain of the FET 12. The gate of the FET 11 is connected to the controller 31. The source of the FET 12 is grounded, and the gate of the FET 12 is connected to the controller 31.

The drain of the FET 13 is connected to the battery 4 via the current sensor 32. The source of the FET 13 is connected to the drain of the FET 14. The gate of the FET 13 is connected to the controller 31. The source of the FET 14 is grounded, and the gate of the FET 14 is connected to the controller 31. The current sensor 32 functions to detect current supplied to the load 5.

The voltage conversion apparatus 1 further includes a coil 41 that is connected between a point between the source of the FET 11 and the drain of the FET 12, and a point between the source of the FET 13 and the drain of the FET 14. When the FET 11, for example, is switched on and off during an operation of the voltage conversion apparatus 1, the coil 41 functions as a smoothing reactor for smoothing voltage and current to be applied to, for example, the load 5.

The controller 31 is adapted to control operations of the voltage conversion apparatus 1, and mainly includes a computer including, for example, CPU, ROM and RAM. Various control routines, such as a voltage conversion control routine, are stored in the ROM. The controller 31 transmits control signals to the respective gates of the FETs 11 to 14, to perform a voltage conversion control operation. The manner of transmitting the control signals to the FETs 11 to 14 will be described in detail when the operation of the voltage conversion apparatus 1 is explained.

The controller 31 is also connected to the drain of the FET 11, and is able to detect a voltage at which the condenser 3 is charged. Furthermore, the controller 31 is connected to the drain of the FET 13, and is able to detect a voltage at which the battery 4 is charged.

Next, the operation of the voltage conversion apparatus constructed according to the embodiment as described above will be described.

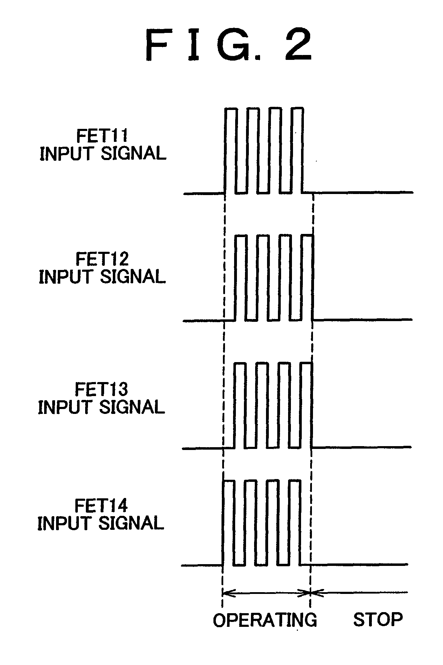

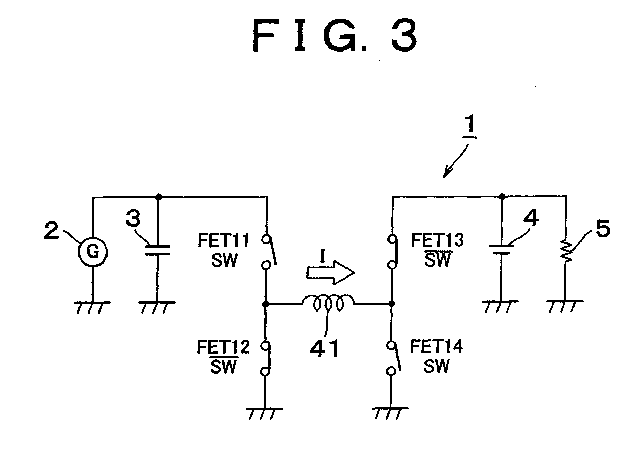

Fig. 2 is a timing chart showing an operation of the voltage conversion apparatus 1 according to the present embodiment. Fig. 3 is a circuit diagram schematically showing the voltage conversion apparatus of the embodiment during its operation. The timing chart of Fig. 2 shows input signals that are applied from the controller 31 to the respective gates of the FETs 11 to 14.

Referring again to Fig. 1, control signals are transmitted from the controller 31 to the gates of the FETs 11 to 14, respectively. Each of the control signals is in the form of a pulse signal that repeats ON/OFF switching (i.e., a rise and a decay of a pulse) at predetermined intervals, as shown in Fig. 2. The FET 11 and the FET 14, which are located diagonally with the coil 41 interposed therebetween, receive pulse signals of the same phase. On the other hand, the FET 12 and the FET 13, which are located diagonally with the coil 41 interposed therebetween, receive pulse signals of the same phase that is reverse to that of the input pulse signals applied to the FET 11 and FET 14.

In the voltage conversion apparatus 1, the FET 11, FET 12 and the coil 41 constitute a step-down chopper, in which the FET 11 functions as a chopping portion of the step-down chopper. In addition, the FET 13, FET 14 and the coil 41 constitute a step-up chopper, in which the FET 14 functions as a chopping portion of the step-up chopper. Thus, the voltage conversion apparatus 1 as a whole functions as a step-up/step-down chopper, in which the step-up chopper is located behind (i.e., in the later stage of) the step-down chopper.

With the above arrangement, the ratio of the voltage V_{B} of the battery 4 to the voltage V_{C} of the condenser 3 is equal to γ / (1 - γ), where γ represents a duty ratio of the pulse signals applied to the FET 11 and the FET 14.

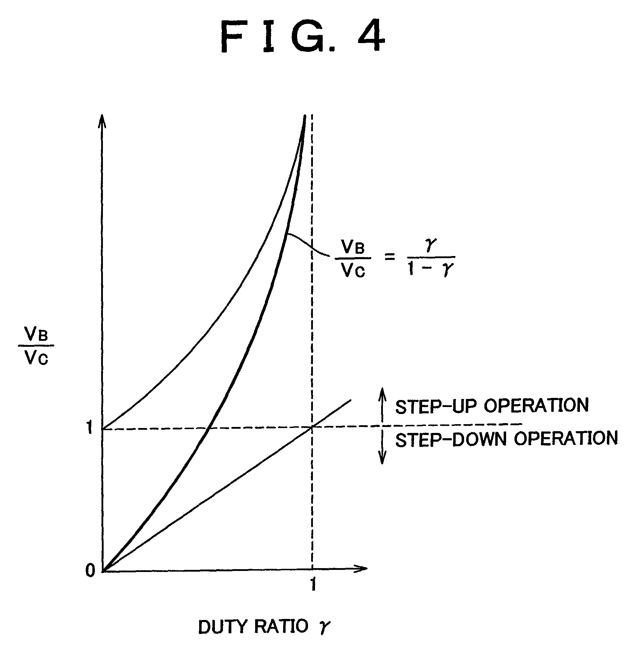

As shown in Fig. 4, the voltage ratio (the ratio of the output voltage to the input voltage) V_{B}/V_{C} is equal to γ / (1 - γ) during both a step-up operation and a step-down operation. Therefore, switching between the step-up operation and the step-down operation can be smoothly accomplished as the duty ratio γ is continuously varied. This arrangement makes it possible to avoid noise and false operations due to the noise, upon switching from a step-down operation to a step-up operation or vice versa.

In the voltage conversion apparatus 1 according to the present embodiment, the operations of the FETs 11 to 14 are controlled by switching on/off the FET 11 and the FET 14 in the same phase, and switching on/off the FET 12 and the FET 13 in the same phase that is reverse to the phase of switching of the FET 11 and the FET 14, as described above. Thus, the FETs 11 to 14 constitute a step-up/step-down chopper in which a step-down chopper and a step-up chopper are connected in series. With this arrangement, the voltage conversion apparatus 1 is able to continuously shift or switch from a step-up operation to a step-down operation, or vice versa, by continuously varying the duty ratio γ of switching of the FETs 11 to 14. This arrangement makes it possible to avoid noise and false operations due to the noise upon switching from a step-down operation to a step-up operation or vice versa.

While the voltage conversion apparatus of the illustrated embodiment is installed on a motor vehicle, such as an automobile, the invention may also be applied to voltage conversion apparatus for use in other applications.

While the invention has been described with reference to an exemplary preferred embodiment thereof, it is to be understood that the invention is not limited to the preferred embodiments or constructions. To the contrary, the invention is intended to cover various modifications and equivalent arrangements. In addition, while the various elements of the preferred embodiments are shown in various combinations and configurations, which are exemplary, other combinations and configurations, including more, less or only a single element, are also within the spirit and scope of the invention.
A voltage conversion apparatus (1) is connected between a first charging/discharging device (3) and a second charging/discharging device (4), and performs voltage conversion between the first and second charging/discharging devices. The apparatus includes a first switching device (11) having one terminal connected to the first charging/discharging device, a second switching device (12) connected between the other terminal of the first switching device and the earth, a third switching device (13) having one terminal connected to the second charging/discharging device, a fourth switching device (14) connected between the other terminal of the third switching device and the earth, and a coil provided between the other terminal of the first switching device and the other terminal of the third switching device. A controller (31) is provided for controlling the first through fourth switching devices, such that the first and fourth switching devices are switched on and off in the same phase, and the second and third switching devices are switched on and off in the same phase that is reverse to that of switching of the first and fourth switching devices. Selected Figure: Fig. 1

## Claims

1. A voltage conversion apparatus (1) which is connected between a first charging/discharging device (3) and a second charging/discharging device (4) and which performs voltage conversion between the first charging/discharging device and the second charging/discharging device, **characterized by** comprising:
a first switching device (11) having one terminal connected to the first charging/discharging device;
a second switching device (12) connected between another terminal of the first switching device and ground;
a third switching device (13) having one terminal connected to the second charging/discharging device;
a fourth switching device (14) connected between another terminal of the third switching device and the ground;
a coil (41) provided between said another terminal of the first switching device and said another terminal of the third switching device; and
a controller (31) that controls operations of the first switching device, the second switching device, the third switching device and the fourth switching device, such that the first switching device and the fourth switching device are switched on and off in a first phase, and the second switching device and the third switching device are switched on and off in a second phase that is reverse to the first phase of switching of the first switching device and the fourth switching device.

2. A voltage conversion apparatus according to claim 1, wherein the first charging/discharging device (3) is charged by use of braking energy of a vehicle.

3. A voltage conversion apparatus according to claim 1 or claim 2, wherein each of the first, second, third and fourth switching devices comprises a field effect transistor having a drain, a source, and a gate, the gate is coupled to the controller to receive a control signal from the controller.

4. A voltage conversion apparatus according to claim 3, further comprising a first diode (21) provided between a drain and a source of the first switching device, a second diode (22) provided between a drain and a source of the second switching device, a third diode (23) provided between a drain and a source of the third switching device, and a fourth diode (24) provided between a drain and a source of the fourth switching device.

5. A voltage conversion apparatus according to claim 4, wherein each of the first, second, third and fourth diodes has a cathode that is directed toward the drain of a corresponding one of the first, second, third and fourth switching devices.

6. A voltage conversion apparatus according to any one of claims 3-5, wherein said one terminal of the first switching device is the drain, said another terminal of the first switching device is the source, which is connected to the drain of the second switching device, and said one terminal of the third switching device is the drain, said another terminal of the third switching device is the source, which is connected to the drain of the fourth switching device.

7. A voltage conversion apparatus which is connected between a first charging/discharging device (3) and a second charging/discharging device (4) and which performs voltage conversion between the first charging/discharging device and the second charging/discharging device, **characterized by** comprising:
a first switching device (11) having a source and a drain, the drain being connected to the first charging/discharging device;
a second switching device (12) having a drain connected to the source of the first switching device, the second switching device having a source connected to ground;
a third switching device (13) having a source and a drain, the drain being connected to the second charging/discharging device;
a fourth switching device (14) having a drain connected to the source of the third switching device, the fourth switching device having a source connected to the ground;
a coil (41) provided between the source of the first switching device and the source of the third switching device; and
a controller (31) that controls operations of the first switching device, the second switching device, the third switching device and the fourth switching device, such that the first switching device and the fourth switching device are switched on and off in a first phase, and the second switching device and the third switching device are switched on and off in a second phase that is reverse to the first phase of switching of the first switching device and the fourth switching device.

8. A voltage conversion apparatus according to claim 7, wherein the first charging/discharging device is charged by use of braking energy of a vehicle.

9. A voltage conversion apparatus according to claim 7 or claim 8, wherein each of the first, second, third and fourth switching devices comprises a field effect transistor having a gate, the gate is coupled to the controller to receive a control signal from the controller.

10. A voltage conversion apparatus according to claim 9, further comprising a first diode (21) provided between the drain and the source of the first switching device, a second diode (22) provided between the drain and the source of the second switching device, a third diode (23) provided between the drain and the source of the third switching device, and a fourth diode (24) provided between the drain and the source of the fourth switching device.

11. A voltage conversion apparatus according to claim 10, wherein each of the first, second, third and fourth diodes has a cathode that is directed toward the drain of a corresponding one of the first, second, third and fourth switching devices.
